## Europäisches Patentamt

## European Patent Office

## Office européen des brevets

(19)

(11) Numéro de publication : **0 500 884 B1**

(12)

# FASCICULE DE BREVET EUROPEEN

(45) Date de publication du fascicule du brevet :
10.05.95 Bulletin 95/19

(51) Int. Cl.⁶ : **F16J 10/04**, F02F 1/16

(21) Numéro de dépôt : **91916193.5**

(22) Date de dépôt : **04.09.91**

(86) Numéro de dépôt international :
**PCT/FR91/00709**

(87) Numéro de publication internationale :
**WO 92/04562 19.03.92 Gazette 92/07**

(54) **DISPOSITIF D'ETANCHEITE ENTRE LA CULASSE ET LA CHEMISE DE CYLINDRE.**

(30) Priorité : **06.09.90 FR 9011066**

(43) Date de publication de la demande :
**02.09.92 Bulletin 92/36**

(45) Mention de la délivrance du brevet :
**10.05.95 Bulletin 95/19**

(84) Etats contractants désignés :
**AT BE CH DE DK ES FR GB GR IT LI LU NL SE**

(56) Documents cités :
**DE-C- 409 617**
**FR-A- 1 043 913**
**FR-A- 2 441 728**
**GB-A- 2 088 949**
**US-A- 2 617 401**
**US-A- 2 721 542**

(73) Titulaire : **Melchior, Jean Frédéric**
**126 Boulevard du Montparnasse**
**F-75014 Paris (FR)**

(72) Inventeur : **Melchior, Jean Frédéric**
**126 Boulevard du Montparnasse**
**F-75014 Paris (FR)**

(74) Mandataire : **Lemoine, Michel et al**
**Cabinet Bernasconi et Vigier**
**13 boulevard des Batignolles**
**F-75008 Paris (FR)**

EP 0 500 884 B1

Jouve, 18, rue Saint-Denis, 75001 PARIS

## Description

L'invention concerne un dispositif d'étanchéité entre la culasse et le cylindre d'une machine alternative à compression de fluide gazeux contenu dans au moins une chambre de travail de volume variable délimitée, à l'intérieur d'un cylindre aménagé dans un bâti, par une culasse maintenue en appui sur ce bâtl à l'aide de goujons de serrage implantés dans celui-ci et par un piston animé d'un mouvement alternatif et coulissant dans ledit cylindre, lequel est constitué d'une chemise cylindrique amovible qui est emmanchée dans un alésage aménagé dans ledit bâti, le piston étant muni d'anneaux d'étanchéité en contact avec la paroi intérieure de la chemise. Par "anneaux d'étanchéité", on entend ici des segments fendus et/ou des garnitures d'étanchéité non fendues.

L'invention est relative plus particulièrement, mais non exclusivement, à un dispositif d'étanchéité pour moteurs alternatifs à combustion interne, le susdit bâti constituant alors ce qu'il est convenu d'appeler un "bloc-cylindre". De tels moteurs peuvent être indifféremment à deux temps ou à quatre temps, à allumage commandé ou par compression, qu'ils soient ou non suralimentés.

La ou chaque chambre de travail ou de combustion d'un moteur alternatif à combustion interne est généralement délimitée par

- un piston coulissant dans un cylindre, aménagé dans le bloc-cylindre, et portant des anneaux d'étanchéité ;
- le cylindre proprement dit ; et
- la culasse appliquée par serrage de goujons sur la face supérieure du bloc-cylindre.

Si, dans les réalisations anciennes, le cylindre était généralement constitué par un alésage usiné directement dans le bloc-cylindre, la plupart des réalisations modernes comportent une chemise intérieure cylindrique séparée qui est interposée entre le piston et le bloc-cylindre, pour des raisons de maintenance et d'interchangeabilité.

On sait qu'il existe deux types de chemises pour moteur à combustion interne, les chemises humides et les chemises sèches, qui se distinguent par le fait qu'elles sont ou non en contact direct, par leur face extérieure, avec un liquide de refroidissement du moteur.

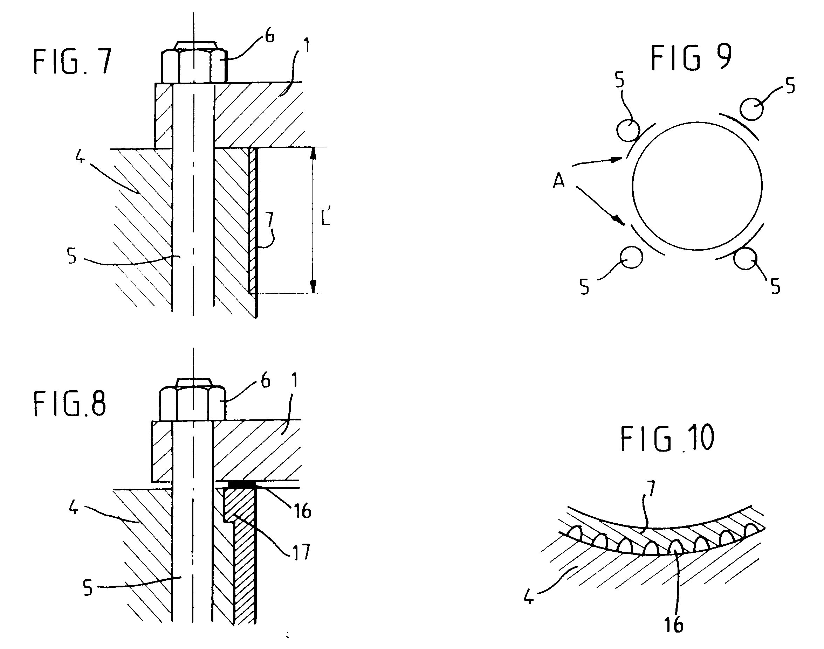

En général, une chemise humide est suffisamment épaisse pour être capable de résister par elle-même aux efforts dus à la pression du fluide gazeux contenu dans la chambre de travail et comporte, à l'une de ses extrémités, une collerette épaisse et de hauteur relativement grande, qui ne permet pas de déformation axiale substantielle et qui est pincée entre la face d'appui du bâti et la culasse, comme montré à la figure 8 qui sera commentée ci-après, la chemise étant libre de se dilater vers le bas indépendamment du bâti, sur le reste de sa longueur. Une double étanchéité eau/air et air/huile est généralement disposée à la partie inférieure de la chemise (c'est-à-dire la partie opposée à la collerette) à l'aide de joints toriques logés dans des gorges qui sont usinées dans la chemise. De plus, l'étanchéité au fluide gazeux comprimé est assurée par un joint de culasse mince séparé, qui est déformé de façon irréversible au montage, par le serrage des goujons de culasse.

De son côté, une chemise sèche est trop mince pour résister par elle-même aux efforts dus à la pression du fluide gazeux. Elle est montée serrée dans un alésage usiné dans le bâti, lequel contient ainsi lesdits efforts. Le bâti est refroidi par un liquide de refroidissement circulant dans des passages aménagés en totalité à l'intérieur du bâti, la chemise étant refroidie par conduction au contact de ce dernier. L'étanchéité au fluide gazeux comprimé est en général analogue à celle d'une chemise humide.

Les considérations qui précèdent restent vraies, au moins dans leur majeure partie, pour les machines alternatives à compression de fluide gazeux autres que les moteurs à combustion interne et en particulier pour les compresseurs.

On a déjà proposé, dans les documents US-A 2 721 542 et GB-A-2 088 949 qui illustre chacun l'état de la technique selon le préambule de la revendication 1, de mettre en place dans un bloc, une chemise dont l'extrêmité inférieure s'appuie contre une portée du bloc et dont l'extrêmité supérieure, libre, dépasse légèrement de la surface supérieure du bloc, dans le but de réduire les déformations dues aux variations de températures.

Un joint de culasse est interposé entre le bloc et la chemise d'une part, et la culasse d'autre part, afin d'assurer un rattrapage de déformation élastique sous l'influence de la tension exercée par les goujons de serrage sollicitant la culasse en direction du bloc.

Ces joints sont les pièces critiques du fonctionnement de ces systèmes, alors que l'épaisseur des chemises dans ces réalisations limite leur possibilité de déformation élastique longitudinale, de sorte que ces dispositifs sont extrêmement sensibles à l'influence des matériaux utilisés, notamment pour l'étanchéité, et à la force de serrage exercée par les goujons d'assemblage de la culasse sur le bloc.

L'invention a pour but de créer un nouveau dispositif d'étanchéité entre la culasse et le cylindre d'une machine alternative à compression de fluide gazeux. Elle a également pour but de réaliser un dispositif d'étan-

2

chéité qui soit capable de résister à des pressions de fluide gazeux plus élevées, pouvant entraîner des déformations cycliques plus importantes. Dans le cas du refroidissement par liquide, elle a encore pour but d'améliorer le refroidissement en réduisant la distance entre les faces de la chemise exposées respectivement au liquide de refroidissement et au fluide gazeux. Par utilisation de chemises minces, l'invention a encore pour but de réduire l'entraxe des cylindres et par conséquent l'encombrement du moteur, pour une pression maximale de fluide gazeux donnée. Elle a de plus pour but de réaliser un tel dispositif d'étanchéité qui ne nécessite pas la présence d'un joint de culasse séparé et qui puisse donc être en général réutilisé après démontage de la culasse.

L'invention concerne

un dispositif d'étanchéité entre la culasse et le cylindre d'une machine alternative à compression de fluide gazeux contenu dans au moins une chambre de travail

de volume variable délimitée, à l'intérieur d'un cylindre aménagé dans un bâti, par une culasse (1) maintenue en appui sur ce bâti à l'aide de goujons de serrage implantés dans celui-ci et par un piston animé d'un mouvement alternatif et coulissant dans ledit cylindre,

lequel est constitué d'une chemise cylindrique amovible (7) qui est emmanchée dans un alésage aménagé dans ledit bâti, le piston étant muni d'anneaux d'étanchéité en contact avec le paroi intérieure de la chemise, la hauteur (L) de la chemise avant serrage de la culasse étant telle que, lorsque la culasse repose avant serrage sur la surface supérieure de la chemise reposant elle-même sur la face d'appui inférieure du bâti, il subsiste une distance appelée "sur-hauteur" (h) entre les faces d'appui de la culasse et du bâti          caractérisé en ce que

- la partie supérieure de la surface extérieure de la chemise fait partie d'une surface cylindrique de directrice de préférence circulaire et de génératrices parallèles à l'axe du cylindre suivant laquelle s'étend la chemise sur au moins la majeure partie de sa longueur ;
- ladite chemise est mince en ce sens qu'elle peut être déformée par la force de compression exercée par le serrage des susdits goujons ;
- la chemise est comprimée axialement, sur au moins la majeure partie de sa longueur, directement entre la culasse

et une face d'appui inférieure circulaire aménagée dans le bâti ;
- la sur-hauteur (h) suffisamment faible pour que, lors du serrage, la culasse vienne en appui direct sur le bâti sans qu'aucun des matériaux constituant la culasse, la chemise et le bâti atteigne les limites de déformation élastique, avec une force d'appui supérieure, compte tenu de l'épaisseur (e) de la chemise, à la force maximale exercée par la pression du fluide gazeux sur la culasse, mais suffisamment grande pour que le contact de chemise /culasse soit maintenu, à tout moment du fonctionnement de la machine.

De préférence, le diamètre extérieur de la chemise avant serrage de la culasse, par rapport au diamètre de l'alésage aménagé dans le bâti, est tel que, l'ensemble une fois monté et serré à l'aide des goujons de culasse sur la face supérieure du bâti, la chemise soit appliquée radialement sur la surface de l'alésage avec une pression suffisamment faible, compte tenu des coefficients de frottement, pour permettre les micro-mouvements axiaux de la chemise dans ledit alésage, provoqués par les déformations de la culasse ou les phénomènes de dilatation différentielle.

Lorsqu'on utilise ici des expressions de position telles que "supérieur" et "inférieur", on suppose que la machine alternative est située de façon telle que son cylindre sont orienté verticalement et qu'il soit obturé à sa partie supérieure par la culasse. Bien entendu, la position d'utilisation de cette machine peut en fait être quelconque.

La chemise conforme à l'invention est donc mince et est montée serrée en fonctionnement dans un alésage usiné dans le bâti. Elle ne présente pas la collerette usuelle et est prise en sandwich sur toute sa longueur, ou tout au moins sur la majeure partie de celle-ci, en assurant directement, après serrage de la culasse, l'étanchéité au fluide gazeux, sans nécessiter par conséquent l'interposition d'un joint de culasse rapporté.

D'autres caractéristiques de l'invention ressortent de la description donnée ci-après de modes de réalisation illustrés par les dessins annexés.

Les figures 1 et 2 de ces dessins représentent, par une coupe radiale partielle, un dispositif d'étanchéité conforme à l'invention, respectivement avant et après serrage des goujons de culasse.

La figure 3 représente le même dispositif, en coupe transversale selon la ligne III-III de la figure 2.

La figure 4 illustre, par un détail à plus grande échelle de la figure 3, les déformations de la chemise au niveau d'une rainure pour le liquide de refroidissement.

Les figures 5 et 6 sont des schémas illustrant certains phénomènes de déformation de la chemise et de la culasse.

Les figures 7 et 8 illustrent, par des vues analogues à celle de la figure 2, les différences entre l'invention et l'état de la technique.

La figure 9 est une vue en coupe transversale schématique illustrant des phénomènes de déformation de la chemise.

La figure 10 montre une variante de la figure 3.

Les figures 11 et 12, enfin, représentent une variante par des vues semblables respectivement à celles des figures 1 et 2.

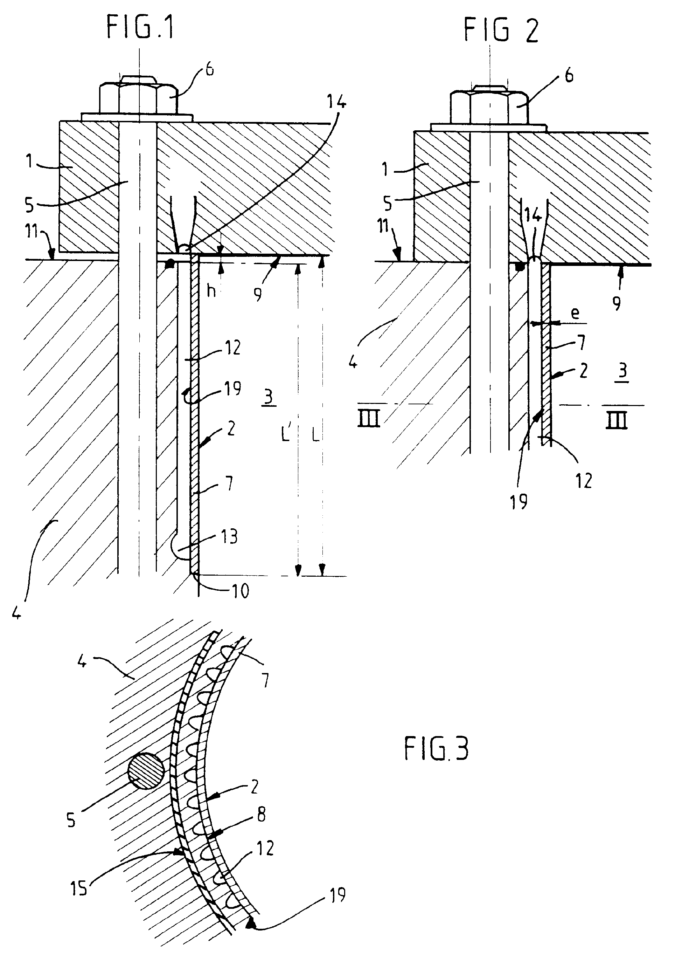

Comme il ressort des figures 1 à 3, l'invention concerne un dispositif d'étanchéité entre la culasse 1 et le cylindre 2 d'une machine alternative à compression de fluide gazeux contenu dans une chambre de travail 3 de volume variable délimitée, à l'intérieur d'un cylindre 2 aménagé dans un bâti 4, par une culasse 1 maintenue en appui sur ce bâti 4 à l'aide de goujons de serrage 5 implantés dans celui-ci, et par un piston animé d'un mouvement alternatif et coulissant dans le cylindre 2. Le piston porte des anneaux d'étanchéité tels que définis ci-dessus et chaque goujon 5 porte un écrou 6. Il n'a pas été estimé nécessaire de représenter la machine alternative elle-même ni le piston avec ses anneaux d'étanchéité car il s'agit là d'éléments qui n'ont pas de rapport direct avec l'invention et qui sont d'ailleurs bien connus des spécialistes.

Le cylindre 2 est constitué d'une chemise amovible 7 qui est emmanchée dans un alésage 8 aménagé dans le bâti 4.

Selon l'invention, la surface extérieure 19 de la chemise 7 fait partie d'une surface cylindrique de directrice de préférence circulaire et de génératrices parallèles à l'axe du cylindre 2 au moins sur la majeure partie supérieure de sa longueur, en particulier sur au moins les 3/4 de cette longueur, et, de préférence, sur toute sa longueur comme représenté aux figures 1 et 2. La chemise 7 est mince (en d'autres termes, son épaisseur e est faible) en ce sens qu'elle peut être déformée (comme expliqué ci-après) par la force de compression exercée par le serrage des goujons 5 et qu'elle est généralement incapable à elle seule de contenir les efforts maxima dus à la pression du fluide gazeux contenu dans la chambre de travail 3. La chemise 7 est comprimée axialement, sur au moins la majeure partie de sa longueur, directement entre la face inférieure 9 de la culasse 1 et une face d'appui inférieure 10 circulaire aménagée dans le bâti 4. Les tranches supérieure et inférieure de la chemise 7, la face d'appui 10 et la partie de la face inférieure 9 de la culasse 1 contre laquelle s'appuie la tranche supérieure de la chemise 7 sont aussi planes que possible pour assurer l'étanchéité de leurs contacts respectifs.

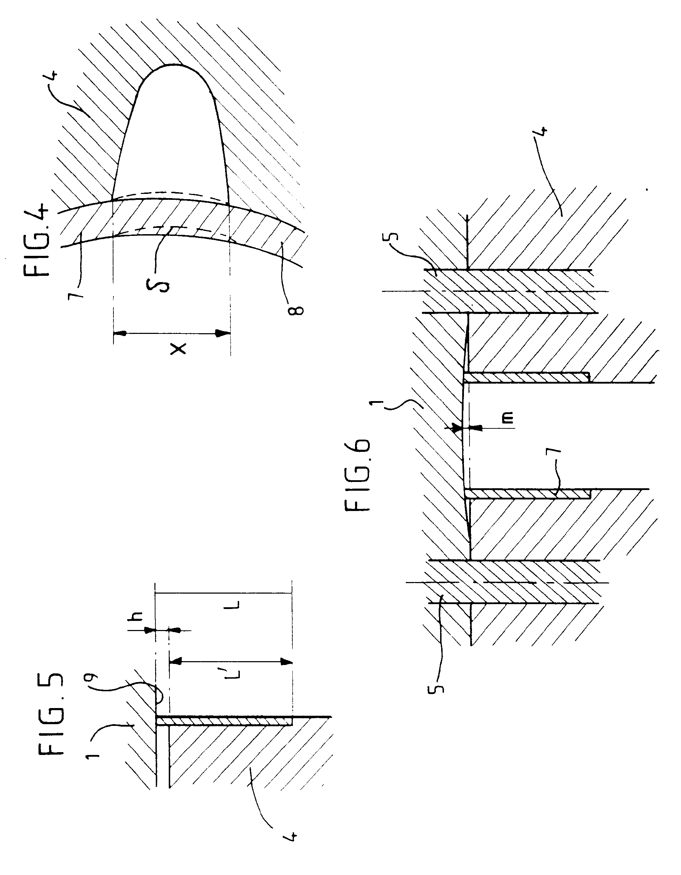

Comme représenté aux figures 1 et 5, la hauteur L de la chemise 7 avant serrage de la culasse 1 (situation représentée aux figures 1 et 5) est telle que, lorsque la culasse 1 repose avant serrage sur la surface supérieure de la chemise 7 reposant elle-même sur la face d'appui inférieure 10 du bâti 4, il subsiste une distance h appelée "sur-hauteur" entre les faces d'appui de la culasse et du bâti, cette sur-hauteur h étant suffisamment faible pour que, lors du serrage, la culasse 1 vienne en appui direct sur le bâti 4 (situation représentée à la figure 2) sans qu'aucun des matériaux constituant la culasse 1, la chemise 7 et le bâti 4 atteigne les limites de déformation élastique, avec une force d'appui supérieure, compte tenu de l'épaisseur e de la chemise 7, à la force maximale exercée par la pression du fluide gazeux sur la culasse 1, mais suffisamment grande pour que le contact entre la chemise 7 et la culasse 1 soit maintenu de façon continue sur toute la périphérie de la face d'appui supérieure de la chemise 7 de façon à maintenir l'étanchéité à tout moment du fonctionnement de la machine.

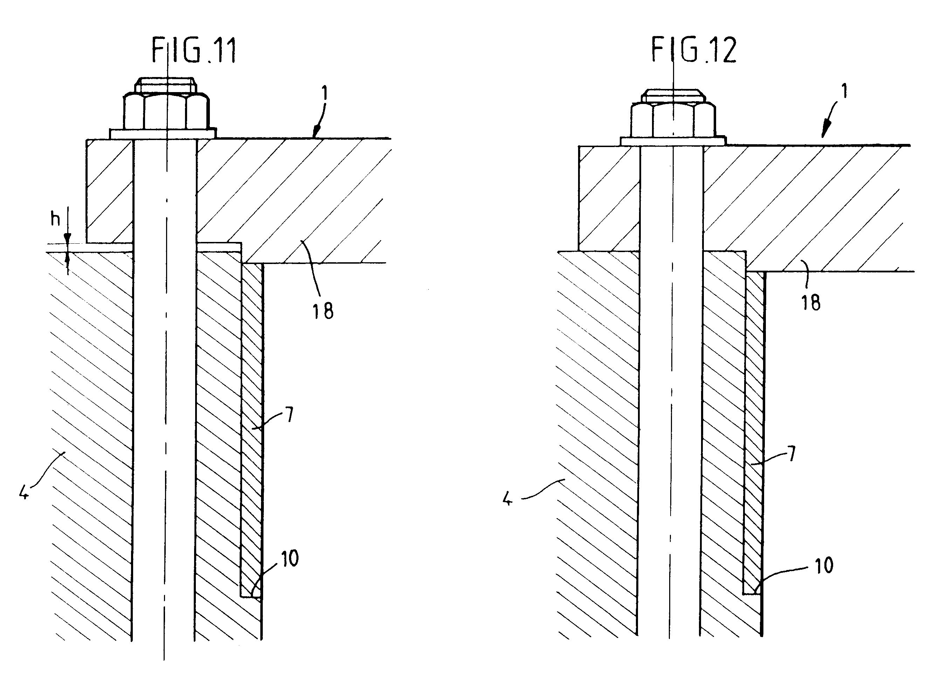

Selon le mode de réalisation représenté aux figures 1 et 2, il a été supposé que la face inférieure de la culasse 1 était entièrement plane, de telle sorte que la sur-hauteur h était égale à la différence existant, avant serrage, entre la hauteur L de la chemise 7 et la distance L' séparant le plan de pose 11 de la culasse 1 sur le bâti 4 et le plan de la face d'appui inférieure 10 de la chemise 7 mais il va de soi, comme le montrent les figures 11 et 12, que cette face inférieure de la culasse 1 pourrait ne pas être entièrement plane et présenter par exemple un centrage tel que 18 (figures 11 et 12) pour recevoir les extrémités supérieures des chemises 7, auquel cas la sur-hauteur h ne serait pas égale à la susdite différence.

Enfin, le diamètre extérieur D+2e de la chemise 7 avant serrage de la culasse 1 (D étant son diamètre intérieur), par rapport au diamètre D∗ de l'alésage 8 est tel que, l'ensemble étant monté et serré à l'aide des goujons 5 jusqu'au contact direct entre la culasse 1 et le bâti 4 (figure 2), la chemise 7 soit appliquée radialement sur la surface de l'alésage 8 avec une pression suffisamment faible, compte tenu des coefficients de frottement, pour permettre les micro-mouvements axiaux de la chemise 7 dans l'alésage 8, provoqués par les déformations de la culasse 1 ou les phénomènes de dilatation différentielle.

De préférence, la machine alternative est à refroidissement par circulation de liquide. A cet effet, des évidements sont avantageusement aménagés à l'interface de la face extérieure de la chemise 7 et de la surface de l'alésage 8, pour permettre au liquide de refroidissement d'y circuler. De préférence encore, les susdits évidements sont constitués par des rainures axiales 12, régulièrement réparties circonférentiellement et ayant avantageusement une forme en voûte.

Selon le mode de réalisation préféré des figures 1 à 3, les rainures 12 sont aménagées dans le bâti 4, la surface extérieure de la chemise 7 étant lisse. Ces rainures 12 communiquent, sur la partie basse de la chemise

4

7, avec une gorge collectrice 13 de liquide de refroidissement aménagée dans le bâti 4 et, sur la partie haute de la chemise 7, avec une gorge collectrice 14 aménagée dans la culasse 1. Un joint d'étanchéité torique 15 (non montré aux figures 1 et 2) assure de préférence l'étanchéité au liquide de refroidissement.

Les règles données ci-dessus permettent aux spécialistes de déterminer les dimensions de la chemise 7 ainsi qu'il va être exposé ci-après à titre d'exemple.

1 - Définition des grandeurs.

Hauteur de la chemise 7 avant serrage, caractérisée par la distance séparant l'appui supérieur sur la culasse et l'appui inférieur sur le bâti $L$

Sur-hauteur : $h$

Epaisseur de la chemise 7 avant serrage : $e$

Diamètre intérieur de la chemise 7 avant serrage : $D$

Pression maximale du fluide gazeux dans la chambre 3 : $(P_f)_{max}$

Force de serrage des goujons $F_G$

2 - Dimensionnement de la sur-hauteur h.

2.1 Le serrage des goujons amène la culasse en appui direct sur le bâti. La chemise est donc comprimée de la valeur h, ce qui entraîne une contrainte de compression $\sigma_c$ qui doit être inférieure à une limite $\sigma_e$ qui doit éviter à chacun des matériaux concernés par le serrage (la culasse, la chemise, le bâti) des déformations inélastiques, donc permanentes :

$$\sigma_c = E . (h/L) < \sigma_e, \text{ soit } h < L.\sigma_e/E$$

E : module d'Young du matériau constituant la chemise.

Avec E = 21.000 hbars (acier) et une contrainte limite de 30 hbars, on aura :

$$h/L < 0,00143$$

2.2 Par ailleurs, l'appui direct de la culasse sur le bâti doit être maintenu dans toutes les conditions de fonctionnement de la machine.

Il suffit pour cela que la force d'appui $(Fa)_o$ de la culasse serrée sur le bâti à l'arrêt de la machine soit au moins égale à la valeur maximale de la force exercée sur la culasse par la pression du fluide gazeux, ce qui, pour une machine monocylindrique, s'exprime par :

$$(Fa)_o > (P_f)_{max} . \pi.D^2/4.$$

Cette force d'appui à l'arrêt de la machine s'écrit:

$$(Fa)_o = F_G - \sigma_C.\pi.e (D + e).$$

soit encore :

$$(Fa)_o = F_G - (h/L).E.\pi.e (D + e).$$

La condition précédente s'exprime donc par l'expression :

$$\frac{h}{L} \leqq \frac{4F_G/\pi.D^2 - (P_f)_{max}}{4E \dfrac{e}{D} (1 + \dfrac{e}{D})}$$

Exemple numérique

$F_G$ = 100.000 daN
$(P_f)_{max}$ = 300 bars
E = 21.000 bars
e = 5 mm
D = 135 mm

h/L < 0,00124, limitation qui est compatible avec la précédente.

2.3 En revanche, la sur-hauteur h doit être suffisamment grande pour pouvoir compenser :

- les déformations cycliques de la culasse pendant le fonctionnement de la machine (généralement de l'ordre de quelques 1/100 de mm),
- les différences de hauteur L d'une chemise à l'autre, dans le cas d'un montage polycylindrique avec une culasse monobloc, afin de maintenir en permanence l'appui supérieur de la chemise sur la culasse de façon à éviter toute perte d'étanchéité de l'assemblage.

On saisit bien l'intérêt de comprimer la chemise sur la majeure partie de sa hauteur, ce qui procure le maximum de "reserve élastique" (en anglais : "spring back") :

si par exemple h/L < 0,001 (condition satisfaisant les deux limitations précitées) et L = 250 mm, on aura h = 0,25 mm, valeur largement suffisante pour compenser les déformations éventuelles ainsi que les variations constructives d'une chemise à l'autre avec des tolérances raisonnables (et donc peu coûteuses).

Au contraire, si l'on ne comprime la chemise que sur la collerette comme il est pratiqué ordinairement (figure 8), la réserve élastique devient insuffisante, ce qui oblige à un montage différent et beaucoup plus contraignant de l'assemblage culasse-chemise-bâti.

3 - Détermination de l'épaisseur de la chemise 7.

L'épaisseur e de la chemise 7 doit être aussi faible que possible, pour minimiser la distance séparant du liquide de refroidissement la face intérieure de cette chemise 7 exposée au fluide gazeux chaud, tel que les gaz de combustion d'un moteur à combustion interne. Toutefois, cette épaisseur e doit être suffisamment grande pour que la chemise ne puisse se déformer excessivement sous l'effet de la pression du fluide gazeux, en particulier en présence de rainures 12 aménagées soit dans le bâti 1, soit dans l'épaisseur même de ladite chemise (comme décrit ci-après en référence à la figure 10), soit dans les deux, au niveau de l'alésage 8 pour permettre le passage du liquide de refroidissement au contact direct de l'interface chemise-bâti. Il existe une relation entre l'épaisseur e et la largeur X des rainures 12, telle que la déformation maximale $\delta$ de la chemise 7 (figure 4), sous l'effet de la pression du fluide gazeux, soit inférieure au micromètre, c'est-à-dire inférieure à l'épaisseur du film d'huile qui est entretenu entre le ou les anneaux d'étanchéité du piston et ladite chemise 7. De cette façon, il y aura permanence de l'étanchéité au niveau du piston.

Pour satisfaire cette condition, le rapport entre l'épaisseur e de la chemise et la largeur X des rainures sera de préférence voisin de l'unité pour de l'acier et plus élevé pour des matériaux moins durs que l'acier.

Par exemple avec une chemise en acier ayant une épaisseur de 5 mm et un diamètre extérieur de 145 mm, on pourra disposer 44 rainures de 5 mm de largeur et de 10 mm de profondeur. Avec une chemise en fonte, on choisira, pour le même espacement des rainures, une épaisseur de 7 mm. Avec une pression maximale de fluide gazeux de 300 bars, la déformation transversale de la chemise sera de l'ordre de 0,5 micromètre, c'est-à-dire très inférieure à l'épaisseur du film d'huile. Il y aura donc permanence de l'étanchéité au niveau du piston.

4 - Serrage de la chemise 7.

Comme expliqué ci-dessus, la chemise 7, une fois mise en place dans l'alésage du bâti (figure 1), est ensuite comprimée jusqu'à ce que le plan de pose de la culasse 1 vienne en contact direct avec la face d'appui du bâti 4 (figure 2).

La compression de la chemise entraîne une augmentation de son diamètre, jusqu'à venir au contact de la surface intérieure de l'alésage du bâti, provoquant le serrage de la chemise dans le bâti.

Toutefois, ce serrage ne devra pas être trop élevé de façon, compte tenu du coefficient de frottement solide chemise-bâti, à permettre les micro-mouvements axiaux de la chemise assurant la permanence du contact de la face d'appui supérieure de la chemise de la culasse, en dépit des déformations cycliques de la culasse résultant de l'action de la pression du fluide gazeux ainsi que des dilatations différentielles (déformations schématisées en m à la figure 6).

Si en effet, le serrage chemise-bâti était trop élevé, allant jusqu'au blocage axial de la chemise, il y aurait risque de décollement de l'appui axial chemise-culasse pouvant provoquer des défauts d'étanchéité au niveau de l'assemblage culasse-chemise.

En pratique, on adoptera un jeu diamétral à froid suffisant de l'ordre de 0,0002 mm qui permettra, après serrage de la culasse, un serrage suffisamment faible pour permettre à la chemise de suivre les micro-mouvements dus à la déformation cyclique de la culasse.

Le dispositif d'étanchéité conforme à l'invention présente de nombreux avantages dont les principaux vont être exposés ci-après.

Selon l'invention, la chemise 7 et le joint de culasse forment une seule et même pièce, comme le montre en particulier la figure 7, alors que, dans les constructions connues (voir par exemple US-A-2.721.542 et GB-A-2.088.949) , il existe un joint de culasse séparé 16, comme le montre la figure 8.

Grâce à sa grande hauteur, l'élément d'étanchéité élastique selon l'invention (chemise 7) est comprimé au montage une fois pour toutes et ne travaille pas en fatigue.

La culasse 1 et la bâti 4, pièces massives et rigides, étant toujours en appui, la longueur en place de la chemise 7 reste constante et ne subit donc pas de cycles de fatigue.

Ceci différencie l'invention des joints de culasse connus à ce jour :

Le joint de culasse classique 16 (figure 8) est de faible épaisseur (quelques millimètres). Il n'a donc aucun pouvoir de compression-détente élastique (aucun "spring back"). Compte tenu de l'élasticité du matériau constitutif du joint de culasse, le pouvoir de compression-détente d'un joint de culasse classique 16 est de l'ordre de quelques micromètres alors que les déformations de la culasse sous l'effet de la pression des gaz peuvent dépasser 10 micromètres. Du fait de cette absence de réserve élastique de l'élément d'étanchéité (le joint de culasse 16), il n'est pas possible d'appliquer la culasse 1 sur le bâti 4 pour reprendre l'effort de traction des goujons 5. En effet, si la déformation de la culasse (> 10 $\mu$) est supérieure à la réserve élastique du joint ($\sim$1 à 2$\mu$), il y a perte de contact et fuite.

En conséquence, le joint de culasse classique 16 est monté en sandwich entre la culasse 1 et le bâti 4 et encaisse donc les variations de pression de contact dues aux variations de pression du fluide gazeux dans la chambre de travail 3 : il travaille donc en fatigue, ce qui pose à terme des problèmes de vieillissement et donc d'étanchéité.

Au contraire, la chemise 7 selon l'invention, étant comprimée élastiquement - avec une grande réserve élastique du fait de sa hauteur - est capable de compenser des déformations non circulaires de la culasse 1. En effet, chaque génératrice de la chemise mince élastique 7 se comporte comme un ressort comprimé, capable de se comprimer/détendre indépendamment des génératrices voisines. Cette chemise est donc capable de compenser des déformations "non circulaires", c'est-à-dire non uniformes en amplitude à même distance de l'axe de la chemise.

Cette situation est courante sur une culasse serrée par un nombre limité de goujons (au nombre de quatre, par exemple, sur la figure 9), pour laquelle le serrage est correctement assuré au voisinage du bossage d'appui de l'écrou 6 du goujon 5 et plus relâché entre les goujons 5. Il s'ensuit des défauts d'étanchéité bien connus des hommes de l'art. A la figure 9, on a schématisé par des arcs de cercle A les zones de bon serrage, entre lesquelles apparaissent des zones de fuite potentielle.

Ce point est sans doute le plus important de l'invention.

Si au contraire la collerette d'appui 17 (figure 8) chemise-culasse est rigide - à cause de son épaisseur - elle ne peut compenser des déformations "non-circulaires" du type décrit ci-dessus. Ceci est le cas de la plupart des joints de culasse utilisés à ce jour.

La chemise 7 selon l'invention étant mince et appliquée contre le bâti 4 très massif et sensiblement isotherme, sa géométrie extérieure reste cylindrique quelque soit sa température et, par conséquent, sa géométrie intérieure n'est pratiquement pas altérée par la température, compte tenu de sa faible épaisseur. Il s'ensuit une absence de conicité de la chemise 7, due à la dilatation comme cela s'observe sur les chemises épaisses. L'étanchéité piston/chemise est améliorée du fait de cette absence de conicité.

L'invention n'est pas limitée au mode de réalisation décrit ci-dessus et représenté mais elle en englobe toutes les variantes qui sont à la portée des spécialistes. En particulier, au lieu de pratiquer dans le bâti 4 les rainures 12 destinées au passage du liquide de refroidissement, il est possible d'aléser le bâti de façon cylindrique circulaire et de pratiquer les rainures dans l'épaisseur de la chemise 7, comme le montre schématiquement la figure 10. La forme préférée en voûte des rainures 12 permet ainsi de réduire encore la distance séparant la face de la chemise 7 exposée aux gaz de combustion, du liquide de refroidissement.

## Revendications

1. Dispositif d'étanchéité entre la culasse (1) et le cylindre (2) d'une machine alternative à compression de fluide gazeux contenu dans au moins une chambre de travail (3) de volume variable délimitée, à l'intérieur d'un cylindre (2) aménagé dans un bâti (4), par une culasse (1) maintenue en appui sur ce bâti (4) à l'aide de goujons de serrage (5) implantés dans celui-ci et par un piston animé d'un mouvement alternatif et coulissant dans ledit cylindre (2), lequel est constitué d'une chemise cylindrique amovible (7) qui est emmanchée dans un alésage (8) aménagé dans ledit bâti (4), le piston étant muni d'anneaux d'étanchéité en contact avec le paroi intérieure de la chemise (7), la hauteur (L) de la chemise (7) avant serrage de la culasse (1) étant telle que, lorsque la culasse repose avant serrage sur la surface supérieure de la chemise (7) reposant elle-même sur la face d'appui inférieure (10) du bâti (4), il subsiste une distance appelée "surhauteur" (h) entre les faces d'appui de la culasse (1) et du bâti (4)

caractérisé en ce que

- la partie supérieure de la surface extérieure (19) de la chemise (7) fait partie d'une surface cylindrique de directrice de préférence circulaire et de génératrices parallèles à l'axe du cylindre (2) suivant laquelle s'étend la chemise sur au moins la majeure partie de sa longueur ;
- ladite chemise (7) est mince en ce sens qu'elle peut être déformée par la force de compression exercée par le serrage des susdits goujons (5)
- la chemise (7) est comprimée axialement, sur au moins la majeure partie de sa longueur, directement entre la culasse (1) et une face d'appui inférieure circulaire (10) aménagée dans le bâti (4) ;
- la sur-hauteur (h) suffisamment faible pour que, lors du serrage, la culasse (1) vienne en appui direct sur le bâti (4) sans qu'aucun des matériaux constituant la culasse (1), la chemise (7) et le bâti (4) atteigne les limites de déformation élastique, avec une force d'appui supérieure, compte tenu de l'épaisseur (e) de la chemise (7), à la force maximale exercée par la pression du fluide gazeux sur la culasse (1), mais suffisamment grande pour que le contact de chemise (7)/culasse (1) soit maintenu, à tout moment du fonctionnement de la machine.

2. Dispositif d'étanchéité selon la revendication 1, caractérisé en ce que le diamètre extérieur de la chemise (7) avant serrage de la culasse (1), par rapport au diamètre de l'alésage (8) aménagé dans le bâti (4), est tel que, l'ensemble une fois monté et serré à l'aide des goujons de culasse (5) jusqu'à ce que soit obtenu l'appui direct de la culasse (1) sur la face supérieure du bâti (4), la chemise (7) soit appliquée radialement sur la surface de l'alésage (8) avec une pression suffisamment faible, compte tenu des coefficients de frottement, pour permettre les micro-mouvements axiaux de la chemise (7) dans ledit alésage (8), provoqués par les déformations de la culasse (1) ou les phénomènes de dilatation différentielle.

3. Dispositif d'étanchéité selon la revendication 1 ou 2, caractérisé en ce que la machine est à refroidissement par circulation de liquide.

4. Dispositif selon la revendication 3, caractérisé en ce que la chemise (7) est léchée sur sa surface extérieure par le liquide de refroidissement, grâce à des évidements aménagés à l'interface de la face extérieure de la chemise (7) et de la surface de l'alésage (8) du bâti (4).

5. Dispositif d'étanchéité selon la revendication 4, caractérisé en ce que les susdits évidements sont constitués par des rainures axiales (12), à répartition circonférentielle régulière, aménagées sur le bâti (4), la surface extérieure de la chemise (7) étant lisse.

6. Dispositif d'étanchéité selon la revendication 4, caractérisé en ce que les susdits évidements sont constitués par des rainures axiales (12), à répartition circonférentielles régulière, aménagées dans l'épaisseur de la chemise (7), la surface de l'alésage (8) étant lisse.

7. Dispositif d'étanchéité selon l'une des revendications 5 et 6, caractérisé en ce que le rapport entre la largeur maximale (X) des rainures (12) et l'épaisseur (e) de la chemise (7) est voisin de l'unité pour une chemise (7) en acier et plus élevé pour une chemise (7) en matériau moins dur que l'acier.

8. Dispositif d'étanchéité selon l'une quelconque des revendications 4 à 7, caractérisé en ce que les rainures (12) ont une forme en voûte.

9. Dispositif d'étanchéité selon l'une quelconque des revendication 1 à 8, caractérisé en ce que la machine est un moteur à combustion interne.

10. Dispositif d'étanchéité selon la revendication 2, caractérisé en ce que la chemise (7) est suffisamment mince pour être incapable à elle seule de contenir les efforts maxima du fluide gazeux contenu dans la chambre de travail (3).

**Patentansprüche**

1. Dichtungsvorrichtung zwischen dem Zylinderkopf (1) und dem Zylinder (2) einer Gaskompressionsmaschine, mit wenigstens einer im Inneren eines in einem Maschinenkörper (4) angeordneten Zylinders vorgesehenen Arbeitskammer (3) von variablem Volumen, die begrenzt wird durch einen Zylinderkopf (1), der auf diesem Maschinenkörper (4) mit Hilfe von in diesem singesetzten Spannstiftschrauben (5) gehalten wird und durch einen in hin- und hergehender Bewegung angetriebenen Kolben der im Zylinder (2) geführt ist, der eine herausnehmbare Laufbuchse (7) aufweist, die in eine im Maschinenkörper vorgesehene Bohrung (8) eingepaßt ist, hierbei ist der Kolben mit Dichtungsringen versehen, die mit der Innenwand der Laufbuchse (7) in Berührung stehen, wobei die Höhe (L) der Laufbuchse (7) vor dem Festziehen des Zylinderkopfes so groß ist, daß der Zylinderkopf (1) vor dem Festziehen auf der oberen Fläche der Laufbuchse (7) aufliegt, während sie selbst auf der unteren Abstützfläche (10) des Maschinenkörpers (4) aufliegt, so daß ein als "Über-Höhe" (h) bezeichneter Abstand zwischen den Abstützflächen und dem Machinenkörper (4) besteht,

**dadurch gekennzeichnet,**

daß der obere Abschnitt der Außenfläche (19) der Laufbuchse (7) Bestandteil einer zylindrischen Fläche ist, die durch eine vorzugsweise kreisförmige Leitkurve und zur Achse des Zylinders (2) parallelen Mantellinien gebildet wird und entlang derer sich die Laufbuchse zumindest über den größten Teil ihrer Länge erstreckt, daß die Laufbuchse (7) dünn gestaltet ist im Sinne, daß sie durch die infolge der Befestigung mit den Spannstiftschrauben (5) ausgeübte Kraft verformt werden kann, daß die Laufbuchse (7) zumindest über den größten Teil ihrer Länge zusammengedrückt wird, und zwar direkt zwischen dem Zylinderkopf (1) und einer im Maschinenkörper (4) angeordneten, darunterliegenden kreisförmigen Abstützfläche (10), daß die Über-Höhe (h) so klein ist, daß der Zylinderkopf (1) nach der Befestigung unmittelbar auf den Maschinenkörper (4) aufliegt, ohne daß irgendein Teil des Materials, aus dem der Zylinderkopf (1), die Laufbuchse (7) und der Maschinenkörper (4) besteht, seine elastischen Verformungsgrenzen erreicht, wobei die Auflagekraft unter Berücksichtigung der Dicke (e) der Laufbuchse (7) größer ist als die maximale, vom Gasdruck auf den Zylinderkopf (1) ausgeübten Kraft, aber genügend groß, daß der Kontakt zwischen Laufbuchse (7) und Zylinderkopf (1) während des Betriebs der Maschine jederzeit aufrechterhalten bleibt.

2. Dichtungsvorrichtung nach Anspruch 1, dadurch gekennzeichnet, daß der Außendurchmesser der Laufbuchse (7) vor dem Festziehen des Zylinderblockes (1) in bezug auf den Durchmesser der Bohrung (8) im Maschinenkörper (4) so groß ist, daß, wenn die Baugruppe einmal mit Hilfe der Spannstiftschrauben (5) montiert und so weit festgezogen ist, bis der Zylinderkopf (1) direkt auf der Oberseite des Maschinenkörpers (4) aufliegt, die Laufbuchse (7) radial gegen die Bohrung (8) drückt und zwar mit einem Druck, der so schwach ist, daß unter Berücksichtigung der Reibungskoeffizienten mikroskopisch kleine Axialbewegungen des Mantels 7 in der Bohrung (8) möglich sind, welche durch Verformungen des Zylinderkopfes (1) oder aufgrund von Phänomenen, der differentiellen Materialausdehnung hervorgerufen werden.

3. Dichtungsvorrichtung nach Anspruch 1 oder 2, dadurch gekennzeichnet, daß die Maschine durch eine zirkulierende Flüssigkeit gekühlt ist.

4. Dichtungsvorrichtung nach Anspruch 3, dadurch gekennzeichnet, daß die Laufbuchse (7) an ihrer Außenfläche aufgrund von Hohlräume an der Grenzfläche zwischen der Außenfläche der Laufbuchse (7) und der Oberfläche der Bohrung (8) im Maschinenkörper (4) von der Kühlflüssigkeit benetzt wird.

5. Dichtungsvorrichtung nach Anspruch 4, dadurch gekennzeichnet, daß die obengenannten Hohlräume aus axialen Rillen (12) bestehen, die im Maschinenkörper (4) gleichmäßig über einen Kreisumfang verteilt sind, wobei die Außenfläche der Laufbuchse (7) glatt ist.

6. Dichtungsvorrichtung nach Anspruch 4, dadurch gekennzeichnet, daß die obengenannten Hohlräume aus axialen Rillen (12) bestehen, die in der Wandstärke der Laufbuchse (7) gleichmäßig über einen Kreisumfang verteilt sind, wobei die Außenfläche der Bohrung (8) glatt ist.

7. Dichtungsvorrichtung nach einem der Ansprüche 5 und 6, dadurch gekennzeichnet, daß das Verhältnis zwischen der maximalen Breite (X) der Rillen (12) und der Dicke (e) der Laufbuchse (7) für den Fall einer Laufbuchse (7) aus Stahl in der Nähe von eins liegt, für einer Laufbuchse (7) aus einem weniger harten Werkstoff als Stahl dagegen über eins.

8. Dichtungsvorrichtung nach einem der Ansprüche 4 bis 7, dadurch gekennzeichnet, daß die Rillen (12) eine gewölbte Form aufweisen.

9. Dichtungsvorrichtung nach einem der Ansprüche 1 bis 8, dadurch gekennzeichnet, daß es sich bei der Maschine um einen Verbrennungsmotor handelt.

**10.** Dichtungsvorrichtung nach Anspruch 2, dadurch gekennzeichnet, daß die Laufbuchse (7) so dünn ist, daß sich nicht allein die maximalen durch das in der Arbeitskammer (3) vorhandene Gas verursachten Kräfte aufnimmt.

## Claims

**1.** Sealing device between the cylinder head (1) and the cylinder (2) of a reciprocating pressurized gas machine in which the gas is contained in at least one variable volume working chamber (3) delimited inside a cylinder (2) formed in a cylinder block (4) by a cylinder head (1) clamped against the cylinder block (4) by clamping studs (5) therein and by a piston sliding with a reciprocating movement in said cylinder (2), which device is formed by a removable cylindrical liner (7) which is sleeved into a bore (8) provided in said cylinder block (4), the piston being provided with sealing rings in contact with the inside wall of the liner (7), the height (L) of the liner (7) before the cylinder head (1) is clamped down being such that when the cylinder head restsebefore it is clamped down on the upper surface of the liner (7) in turn resting on the lower bearing surface (10) of the cylinder block (4) there remains a distance called "excess height" ($\underline{h}$) between the bearing surfaces of the cylinder head (1) and the cylinder block (4),

characterized in that
- the upper part of the outside surface (19) of the liner (7) is part of a cylindrical, preferably circular cross-section surface with generatrices parallel to the axis of the cylinder (2), along which surface extends the liner at least over the major part of its lenght ;
- said liner (7) is thin in the sense that it can be deformed by the compression force exerted by said clamping studs (5) ;
- the liner (7) is compressed axially over at least the major part of its length directly between the cylinder head (1) and a circular lower bearing surface (10) formed in the cylinder block (4) ;
- the excess height ($\underline{h}$) is sufficiently small that when the cylinder head (1) is clamped down it bears directly on the cylinder block (4) without any of the materials of the cylinder head (1), the liner (7) and the cylinder block (4) reaches its limit of elastic deformation, with a bearing force greater, given the thickness ($\underline{e}$) of the liner (7), than the maximum force exerted by the gas pressure on the cylinder head (1) but sufficiently high for contact between the liner (7) and the cylinder head (1) to be maintained at all times during operation of the machine.

**2.** Sealing device according to claim 1 characterized in that the outside diameter of the liner (7) before the cylinder head (1) is clamped down is such in relation to the diameter of the bore (8) formed in the cylinder block (4) that after fitting and clamping thereof using the studs (5) until direct bearing engagement of the cylinder head (1) on the upper surface of the cylinder block (4) is obtained the liner (7) is applied radially to the surface of the bore (8) with a sufficiently low pressure, given the coefficients of friction, to enable micro-movements of the liner (7) in the axial direction in said bore (8) due to deformation of the cylinder head (1) or differential thermal expansion phenomena.

**3.** Sealing device according to claim 1 or claim 2 characterized in that the machine is liquid-cooled.

**4.** Device according to claim 3 characterized in that the outside surface of the liner (7) is bathed in the cooling liquid by virtue of openings formed at the interface between the outside surface of the liner (7) and the surface of the bore (8) in the cylinder block (4).

**5.** Sealing device according to claim 4 characterized in that said openings are axial grooves (12) equi-angularly distributed in the circumferential direction on the cylinder block (4), the outside surface of the liner (7) being smooth.

**6.** Sealing device according to claim 4 characterized in that said openings are axial grooves (12) equi-angularly distributed in the circumferential direction on the liner (7), the surface of the bore (8) being smooth.

**7.** Sealing device according to claim 5 or claim 6 characterized in that the ratio between the maximum width (X) of the grooves (12) and the thickness ($\underline{e}$) of the liner (7) is close to unity for a steel liner (7) and higher for a liner (7) made from a material softer than steel.

**8.** Sealing device according to any one of claims 4 through 7 characterized in that the grooves (12) are vault-shaped.

9. Sealing device according to any one of claims 1 through 8 characterized in that the machine is an internal combustion engine.

10. Device according to claim 2 characterized in that the liner 7 is sufficiently thin to be incapable of its own accord of containing the maximum forces exerted by the gas contained in the working chamber (3).

FIG.1

FIG 2

FIG.3

FIG.4

FIG.5

FIG.6

FIG. 7

FIG 9

FIG.8

FIG.10

EP 0 500 884 B1

FIG.11

FIG.12

h

18

7

4

10

EP 0 500 884 B1